# EUROPEAN PATENT APPLICATION

(11) **EP 4 792 942 A1**
(43) Date of publication of application: **19.08.2026**
(21) Application number: 24884142.1
(22) Date of filing: 16.08.2024
(51) Int. Cl.: B05C 5/02, H01M 4/04, H01M 4/139, B05C 11/10

(54) **COATING MECHANISM AND COATING DEVICE**

(30) Priority: 30.10.2023 CN 202311413967
(71) Applicant: Contemporary Amperex Technology Co., Limited, Ningde, Fujian 352100 (CN)
(72) Inventor: WENG, Zhirong, Ningde, Fujian 352100 (CN); JIANG, Liang, Ningde, Fujian 352100 (CN); LU, Lei, Ningde, Fujian 352100 (CN)
(74) Representative: Ziebig Hengelhaupt Intellectual Property Attorneys Patentanwaltskanzlei PartGmbB
(86) International application number: PCT/CN2024/112832
(87) International publication number: WO 2025/092135

(57) **Abstract**

Provided in the present application are a coating mechanism and a coating device. The coating mechanism comprises a coating head and an acceleration mechanism, the coating head being provided with an accommodating cavity, and the cavity wall of the accommodating cavity being provided with a feeding opening and a discharging opening. At least part of the acceleration mechanism is located in the accommodating cavity. The acceleration mechanism is configured to split in the first direction a slurry stream entering from the feeding opening, the first direction intersecting with a discharging direction of the discharging opening. The slurry enters the accommodating cavity of the coating head through the feeding opening and is coated onto an electrode sheet by means of the discharging opening. Using the part of the acceleration mechanism inside the accommodating cavity can raise the flow speed of the slurry in the accommodating cavity, i.e. using an active mode to raise the flow speed of the slurry in the accommodating cavity, thereby solving the problem of slurry accumulation in accommodating cavities.

## Description

### CROSS-REFERENCE TO RELATED APPLICATION

The present application claims priority to Chinese Patent Application No. 2023114139678 filed on October 30, 2023, the content of which is incorporated herein by reference in its entirety.

### TECHNICAL FIELD

The present application relates to the technical field of coating dies, and in particular, to a coating mechanism and a coating device.

### BACKGROUND

During a lithium battery coating process, a slurry is fed into a coating die by means of, for example, an extruder. The slurry flows within the coating die by means of a speed at which it flows into the feed material of the coating die (i.e., inertia), and is applied onto an electrode plate by means of the coating port of the coating die. Therefore, when the fluidity of the slurry in the coating die is poor, the coating of the coating die is greatly affected.

### SUMMARY

The main technical problem to be solved by the present application is to provide a coating mechanism and a coating device to solve the problem of poor fluidity of a slurry in a coating die.

To resolve the above technical problem, a first technical solution adopted in the present application is to provide a coating mechanism. The coating mechanism includes a coating head and a speed increasing mechanism. The coating head is provided with an accommodating cavity; a cavity wall of the accommodating cavity is provided with a feed inlet and a discharge outlet. At least a part of the speed increasing mechanism is located in the accommodating cavity; the speed increasing mechanism is configured to distribute a slurry entering from the feed inlet in a first direction, the first direction intersecting with a discharge direction of the discharge outlet.

In this way, the slurry enters the accommodating cavity of the coating head via the feed inlet and is applied onto an electrode plate via the discharge outlet. Compared with a solution in the related art in which the slurry flows in the coating die by inertia, in the embodiments of the present application, when the slurry is distributed in the first direction by a part of the speed increasing mechanism located in the accommodating cavity, the flow velocity of the slurry in the accommodating cavity can be naturally increased. That is, the flow velocity of the slurry in the accommodating cavity is actively increased, thereby solving the problem of poor fluidity of the slurry in the accommodating cavity and preventing the slurry from accumulating in the accommodating cavity.

In addition, the speed increasing mechanism distributes the slurry in the first direction X, so that the slurry in the accommodating cavity can be distributed and fed more uniformly in the first direction X; that is, the slurry is prevented from accumulating in the first direction. In this way, the slurry can be continuously discharged from the discharge outlet, thereby avoiding intermittent discharge of the slurry. For example, a relatively uniform slurry can also flow out from the discharge outlet with relatively large dimensions.

In some embodiments, the speed increasing mechanism includes a screw (which may be referred to as a first screw); the screw is at least partially located in the accommodating cavity; an axial direction of the screw is parallel to the first direction, and the screw located in the accommodating cavity is configured to distribute a slurry entering from the feed inlet in the first direction and drive the distributed slurry to flow to the discharge outlet.

In this way, when the first screw located in the accommodating cavity rotates, the first screw will drive the slurry located in the screw groove of the first screw to flow in the axial direction (i.e., the first direction) of the first screw. The rotary force (or centrifugal force) generated by the first screw will enable the slurry located in the screw groove of the first screw to flow in the radial direction (e.g., the second direction) of the first screw. In this way, a part of the slurry is distributed in the first direction, and a part of the slurry flows to the discharge outlet, thereby preventing the slurry from accumulating in the first direction and increasing the speed at which the slurry flows to the discharge outlet.

In some embodiments, the accommodating cavity is provided with a first cavity wall and a second cavity wall; the first cavity wall intersects with the first direction, and the second cavity wall intersects with a second direction; the second direction intersects with the first direction. The feed inlet is located on the first cavity wall, and the discharge outlet is located on the second cavity wall; the screw extends from the feed inlet to an outside of the accommodating cavity; a part of the screw located outside the accommodating cavity is configured to convey a slurry into the accommodating cavity. In this way, the part of the first screw located outside the accommodating cavity can drive the part of the first screw located in the accommodating cavity to rotate. When the part of the first screw located outside the accommodating cavity rotates, the part of the first screw located outside the accommodating cavity can serve to convey the slurry to the accommodating cavity. That is, the part of the first screw located outside the accommodating cavity conveys the slurry located outside the accommodating cavity into the accommodating cavity via the feed inlet. At the same time, the part of the first screw located in the accommodating cavity serves to distribute the slurry in the first direction. Therefore, the first screw in these embodiments is configured to convey the slurry into the accommodating cavity, and is further configured to distribute the slurry in the accommodating cavity in the first direction. In this case, the first direction may be understood as the axial direction of the first screw, and is directed from the first cavity wall to the third cavity wall.

In some embodiments, a part of the screw located in the accommodating cavity is fixedly connected or detachably connected to the part of the screw located outside the accommodating cavity. In this way, the part of the first screw located in the accommodating cavity and the part of the first screw located outside the accommodating cavity rotate coaxially.

In some embodiments, the accommodating cavity is provided with a mounting port, a first cavity wall, a second cavity wall, and a third cavity wall; the first cavity wall and the third cavity wall are disposed opposite to each other in the first direction, and the second cavity wall intersects with a second direction; the second direction intersects with the first direction. The feed inlet is located on the first cavity wall, the discharge outlet is located on the second cavity wall, and the mounting port is located on a third side wall; the screw passes through the mounting port and is disposed between the first cavity wall and the third cavity wall. In this way, the first screw only serves to distribute the slurry in the accommodating cavity in the first direction, and does not serve to transfer the slurry into the accommodating cavity. For example, the slurry can be conveyed into the accommodating cavity via the feed inlet by the extruder described below. The feed inlet is located on the first cavity wall, and the slurry enters the accommodating cavity via the feed inlet located on the first cavity wall. The slurry entering from the feed inlet may directly fall on the first screw and be distributed by the first screw in the first direction; or, the first screw distributes the slurry located in the accommodating cavity in the first direction. In this case, the first direction may be understood as the axial direction of the first screw, and is directed from the first cavity wall to the third cavity wall, i.e., unidirectional distribution.

In some embodiments, the accommodating cavity is provided with a mounting port, a first cavity wall, a second cavity wall, a third cavity wall, and a fourth cavity wall; the first cavity wall and the second cavity wall are disposed opposite to each other in the first direction, and the second cavity wall and the fourth cavity wall are disposed opposite to each other in a second direction; the second direction intersects with the first direction. The feed inlet is located on the fourth cavity wall, and the discharge outlet is located on the second cavity wall; the mounting port is located on the first cavity wall or the third cavity wall, and the screw passes through the mounting port and is disposed between the first cavity wall and the third cavity wall. In this way, the first screw only serves to distribute the slurry in the accommodating cavity in the first direction, and does not serve to transfer the slurry into the accommodating cavity. For example, the slurry can be conveyed into the accommodating cavity via the feed inlet by the extruder described below. The feed inlet is located on the fourth cavity wall, and the slurry enters the accommodating cavity via the feed inlet located on the fourth cavity wall. The slurry entering from the feed inlet may directly fall on the first screw and be distributed by the first screw in the first direction; or, the first screw distributes the slurry located in the accommodating cavity in the first direction. In this case, the first direction may be understood as the axial direction of the first screw, and the first screw distributes the slurry to one side of the first cavity wall and the first screw distributes the slurry to one side of the third cavity wall at the same time, i.e., bidirectional distribution.

In some embodiments, the screw includes a first sub-screw and a second sub-screw, and the first sub-screw and the second sub-screw are located on two opposite sides of the feed inlet in the first direction, respectively. The first sub-screw and the second sub-screw are fixedly connected or detachably connected, and the first sub-screw and the second sub-screw have opposite spiral directions. Alternatively, the first sub-screw and the second sub-screw are separate structures, and the first sub-screw and the second sub-screw have a same spiral direction and are configured to rotate in opposite directions. In this way, the slurry enters from the feed inlet, and is distributed by the first sub-screw in the arrow direction of the first direction, and is also distributed by the second sub-screw in the opposite direction of the arrow of the first direction. Therefore, the slurry at the feed inlet is reduced, and material accumulation at the feed inlet is avoided.

In some embodiments, in the case that the first sub-screw and the second sub-screw are fixedly connected or detachably connected, the first sub-screw and the second sub-screw are of a symmetrical structure. In this way, the first sub-screw and the second sub-screw can uniformly distribute the slurry entering from the feed inlet; that is, the slurry on the side proximal to the first cavity wall is approximately the same as or as much as the slurry on the side proximal to the third cavity wall.

In some embodiments, the accommodating cavity is further provided with a second cavity wall and a fourth cavity wall, and the second cavity wall and the fourth cavity wall are disposed opposite to each other in a second direction; the discharge outlet is located on the second cavity wall, and the screw is proximal to the fourth cavity wall. In this way, the slurry thrown out by the first screw to the side of the fourth cavity wall can be reduced.

In some embodiments, in the accommodating cavity, in a direction away from the feed inlet in the first direction, a lead of the screw gradually decreases; and/or a groove depth of a screw groove of the screw gradually decreases. In this way, the flow velocity of the slurry in the first direction from the groove depth of the screw groove of the first screw to the discharge outlet is relatively consistent, so that the extrusion speed at the discharge outlet is substantially the same or the same. That is, in the first direction, the flow velocity of the slurry flowing out from the first screw is uniform at all positions on the side facing the discharge outlet.

In some embodiments, in a second direction, the accommodating cavity includes a receiving cavity receiving at least a part of the screw and an extrusion cavity; the discharge outlet is located on a cavity wall on a side of the extrusion cavity distal to the receiving cavity; in a third direction, a dimension of a junction between the extrusion cavity and the receiving cavity is more than twice a dimension of the discharge outlet; the second direction intersects with the first direction and the third direction, and the third direction intersects with the second direction. In this way, the discharge outlet can well discharge the slurry, avoiding intermittent discharge of the slurry; the uniformity of the slurry discharged from the discharge outlet is good.

In some embodiments, in a direction from the receiving cavity to the discharge outlet, the extrusion cavity includes a first compression cavity, a damping cavity, and a second compression cavity that are in communication with each other sequentially; the discharge outlet is located on a cavity wall on a side of the second compression cavity distal to the receiving cavity; in the direction from the receiving cavity to the discharge outlet, a dimension of the first compression cavity in the third direction is greater than a dimension of the second compression cavity in the third direction; in the first direction, a dimension of the damping cavity in the third direction first decreases and then increases. In this way, the slurry is discharged from the receiving cavity, and is compressed by the first compression cavity, the damping cavity, and the second compression cavity sequentially, so that the slurry is compressed multiple times, and the slurry is re-adhered or combined into a film, and finally discharged from the discharge outlet. The dimension of the provided first compression cavity in the third direction is greater than the dimension of the second compression cavity in the third direction, so that two compression processes can be implemented.

In the first direction, the dimension of the damping cavity in the third direction first decreases and then increases. That is, the space (or volume) of the damping cavity proximal to the first cavity wall and the third cavity wall is larger than the space (or volume) of the damping cavity located between the first cavity wall and the third cavity wall. In this way, the damping cavity can apply different flow resistances to the slurry in the first direction, so that the extrusion speed at the discharge outlet is more uniform. Therefore, the provided damping cavity can play a role in well distributing the slurry, avoiding the problem of material accumulation at a part of the damping cavity and no slurry at another part of the damping cavity.

In some embodiments, a shape of the discharge outlet is a flat shape, and a length direction of the discharge outlet is the first direction. In this way, the slurry subjected to distribution is substantially flat, and the flat slurry can flow into the discharge outlet directly, so that the slurry can flow out from the flat coating port, avoiding the problem that no slurry is discharged at some parts of the coating port. For example, the flat shape may be a flat quadrangle (i.e., a rectangle), and the first direction may be the extension direction of the long side of the rectangle. For another example, the flat shape may be an ellipse, and the first direction may be the extension direction of the major axis of the ellipse.

To solve the above technical problem, a second technical solution adopted in the present application is to provide a coating device. The coating device includes the above coating mechanism and a material supply mechanism, and the material supply mechanism is configured to convey a slurry to the feed inlet of the coating mechanism. In this way, the slurry can be conveyed into the feed inlet of the coating mechanism by the material supply mechanism.

In some embodiments, in the case that a screw of the coating mechanism extends from the feed inlet to an outside of an accommodating cavity, the material supply mechanism is a screw feeding mechanism configured to drive the screw of the coating mechanism to rotate. In this way, the screw feeding mechanism can serve to supply material to the coating mechanism, and can also serve to drive the first screw of the coating mechanism to distribute the slurry in the first direction. In this example, the part of the first screw located outside the accommodating cavity in the above embodiments may be understood as a part of a screw (which may be referred to as a second screw) of the screw feeding mechanism.

In some embodiments, in the case that the coating mechanism is provided with a mounting port, the coating device further includes a driving member connected to a screw of the coating mechanism and configured to drive the screw of the coating mechanism to rotate.

### BRIEF DESCRIPTION OF THE DRAWINGS

To more clearly illustrate the technical solutions in embodiments of the present application, the drawings required for illustrating the embodiments are briefly described below. Apparently, the drawings in the following description illustrate merely some embodiments of the present application, and those of ordinary skill in the art may still derive other drawings from these drawings without creative efforts.
FIG. 1 is a structural diagram of a coating mechanism according to an embodiment of the present application;
FIG. 2 is a partial cross-sectional view along line A-A in FIG. 1;
FIG. 3 is a cross-sectional view of a coating mechanism according to an embodiment of the present application;
FIG. 4 is another cross-sectional view of a coating mechanism according to an embodiment of the present application;
FIG. 5 is yet another cross-sectional view of a coating mechanism according to an embodiment of the present application;
FIG. 6 is a structural diagram illustrating a reduced groove depth of a screw groove of a screw in a coating mechanism according to an embodiment of the present application;
FIG. 7 is a structural diagram illustrating a reduced lead of a screw in a coating mechanism according to an embodiment of the present application;
FIG. 8 is a partial cross-sectional view of a first mold along line A-A in FIG. 1;
FIG. 9 is a partial cross-sectional view of a first mold along line B-B in FIG. 1;
FIG. 10 is a structural diagram of a coating device according to an embodiment of the present application;
FIG. 11 is a cross-sectional view of a coating mechanism according to an embodiment of the present application;
FIG. 12 is another cross-sectional view of a coating mechanism according to an embodiment of the present application;
FIG. 13 is yet another cross-sectional view of a coating mechanism according to an embodiment of the present application.

In the drawings: 1. coating mechanism; 11. coating head; 111. first mold; 112. second mold; 12. discharge outlet; 13. feed inlet; 14. first screw; 141. first sub-screw; 142. second sub-screw; 15. accommodating cavity; 151. receiving cavity; 152. extrusion cavity; 1521. first compression cavity; 1522. damping cavity; 1523. second compression cavity; 153. first cavity wall; 154. second cavity wall; 155. third cavity wall; 156. fourth cavity wall; 16. mounting port; 2. material supply mechanism; 21. second screw; 22. supply inlet; 23. supply outlet; 3. driving member.

### DETAILED DESCRIPTION

The solutions of the embodiments of the present application will be described in detail below with reference to the drawings in the specification.

In the following description, for the purpose of illustration rather than limitation, specific details such as specific system structures, interfaces, and technologies are proposed to facilitate a thorough understanding of the present application.

The technical solutions in the embodiments of the present application will be clearly and completely described hereinafter with reference to the drawings in the embodiments of the present application. It is apparent that the described embodiments are only some, but not all, embodiments of the present application. Based on the embodiments in the present application, all other embodiments obtained by those of ordinary skill in the art without creative efforts shall fall within the protection scope of the present application.

In the present application, the terms "first", "second", and "third" are used for description only and are not to be construed as indicating or implying relative importance or implicitly specifying the number of technical features indicated. Thus, a feature defined by "first", "second", or "third" may explicitly or implicitly indicate that at least one such feature is included. In the description of the present application, "plurality" means at least two, e.g., two or three, unless otherwise explicitly and specifically defined. All directional indications (such as up, down, left, right, front, and rear) involved in the embodiments of the present application are only used for explaining the relative position relationship between the components, the motion situation, and the like under a certain posture (as shown in the drawing), and if the certain posture is changed, the directional indications are changed accordingly. Moreover, the terms "comprise", "include", and "provided with", and any variants thereof are intended to cover a non-exclusive inclusion. For example, a process, method, system, product, or a device including a series of steps or units is not limited to the listed steps or units, but optionally further includes an unlisted step or unit, or optionally further includes other steps or units that are inherent to such process, method, product, or device.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the related art, during a coating process (e.g., a lithium battery coating process), a slurry is fed into a coating die by means of, for example, an extruder. The slurry flows within the coating die by means of a speed at which it flows into the feed inlet of the coating die (i.e., inertia), and is applied onto, for example, an electrode plate by means of the coating port of the coating die. However, when the viscosity of the slurry is large (for example, greater than 10000 Pa·s), the fluidity of the slurry in the coating die is poor, which may lead to material accumulation in the coating die, so that the coating port of the coating die cannot apply the slurry on the electrode plate, or the coating die intermittently applies the slurry onto the electrode plate. The lithium battery manufactured using the electrode plate may affect the service life of the lithium battery.

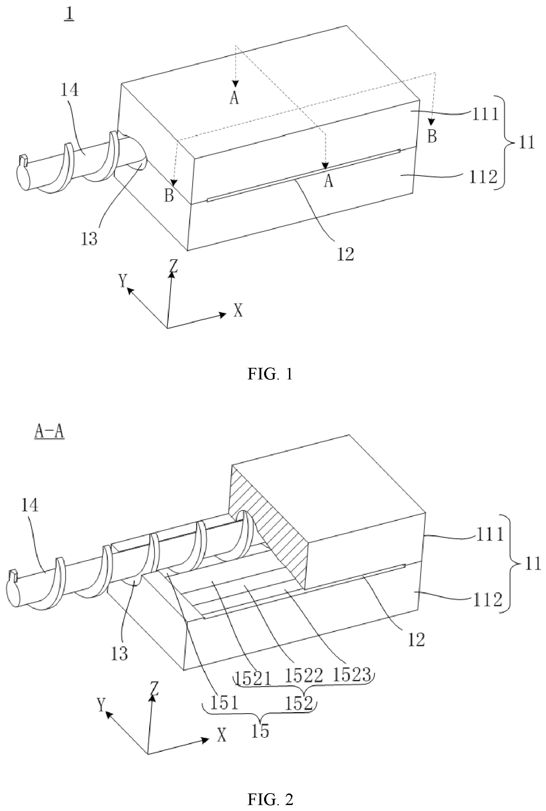

To solve the problem of poor fluidity of a slurry in a coating die, the embodiments of the present application provide a coating mechanism. Referring to FIGs. 1 and 2, the coating mechanism 1 includes a coating head 11 and a speed increasing mechanism. The coating head 11 is provided with an accommodating cavity 15; the cavity wall of the accommodating cavity 15 is provided with a feed inlet 13 and a discharge outlet 12. At least a part of the speed increasing mechanism is located in the accommodating cavity 15 and is spaced apart from the discharge outlet 12. The speed increasing mechanism is configured to distribute a slurry entering from the feed inlet 13 in a first direction X; the first direction X intersects with the discharge direction of the discharge outlet 12.

In this way, the slurry enters the accommodating cavity 15 of the coating head 11 via the feed inlet 13 and flows out via the discharge outlet 12, so as to apply the slurry onto an electrode plate. Compared with a solution in the related art in which the slurry flows in the coating die by inertia, in the embodiments of the present application, when the slurry is distributed in the first direction by a part of the speed increasing mechanism located in the accommodating cavity 15, the flow velocity of the slurry in the accommodating cavity 15 can be naturally increased. That is, the flow velocity of the slurry in the accommodating cavity 15 is actively increased, thereby solving the problem of poor fluidity of the slurry in the accommodating cavity 15 and preventing the slurry from accumulating in the accommodating cavity 15.

In addition, the speed increasing mechanism distributes the slurry in the first direction X, so that the slurry in the accommodating cavity 15 can be distributed and fed more uniformly in the first direction X; that is, the slurry is prevented from accumulating in the first direction X. In this way, the slurry can be continuously discharged from the discharge outlet 12, thereby avoiding intermittent discharge of the slurry. For example, a relatively uniform slurry can also flow out from the discharge outlet 12 with relatively large dimensions.

The embodiments of the present application provide a comparative solution. A coating die in the comparative solution may include a coating head and a rotating feeding member (for example, a screw), and the coating head is provided with an accommodating cavity, and a feed inlet and a discharge outlet that are in communication with the accommodating cavity. The rotating feeding member is located in the accommodating cavity, and the axial direction of the rotating feeding member coincides with the discharge direction of the discharge outlet. In this way, the slurry flows into the accommodating cavity via the feed inlet, and the slurry is driven to flow quickly to the discharge outlet by means of the rotating feeding member. That is, the rotating feeding member serves to accelerate the flow of the slurry.

Compared with the coating die in the comparative solution, in the coating mechanism 1 provided in the embodiments of the present application, the speed increasing mechanism can accelerate the flow of the slurry, and can also distribute the slurry in the first direction X. In this way, the slurry can be continuously discharged from the discharge outlet 12, thereby avoiding intermittent discharge of the slurry and avoiding material accumulation in the accommodating cavity 15.

In the embodiments of the present application, referring to FIG. 1, the coating mechanism 1 has a first direction X, a second direction Y, and a third direction Z. The first direction X intersects with (e.g., is perpendicular to) the second direction Y, and intersects with (e.g., is perpendicular to) the third direction Z. The second direction Y intersects with (e.g., is perpendicular to) the third direction Z. In the case that the first direction X is perpendicular to the second direction Y and perpendicular to the third direction Z, and the second direction Y is perpendicular to the third direction Z, the first direction X, the second direction Y, and the third direction Z can be used to establish a three-dimensional rectangular coordinate system. In this specification, an example in which a three-dimensional rectangular coordinate system can be established using the first direction X, the second direction Y, and the third direction Z is used for description.

With continued reference to FIGs. 1 and 2, the coating head 11 is provided with an accommodating cavity 15; the cavity wall of the accommodating cavity 15 is provided with a feed inlet 13 and a discharge outlet 12. That is, the feed inlet 13 and the discharge outlet 12 are both in communication with the accommodating cavity 15.

Illustratively, the feed inlet 13 may be designed in a shape adapted to requirements. For example, the shape of the feed inlet 13 may be a polygon (e.g., a rectangle, a square, a hexagon), a circle, an ellipse, or the like. In some examples, one or a plurality of feed inlets 13 may be provided. The following description is given by taking an example in which one feed inlet 13 is provided.

Illustratively, the discharge outlet 12 may be designed in a shape adapted to requirements. The shape of the discharge outlet 12 may be a polygon (e.g., a rectangle, a square, a hexagon), a circle, an ellipse, or the like. In some examples, the shape of the discharge outlet 12 may be a flat shape. The flat shape may be a flat polygon (with four or more sides), an ellipse, or the like. For example, the flat polygon may be a flat quadrangle (i.e., a rectangle), a flat pentagon, or a flat hexagon. In some examples, one or a plurality of discharge outlets 12 may be provided. The following description is given by taking an example in which one discharge outlet 12 is provided and the shape of the discharge outlet 12 is a flat shape. It can be understood that for the discharge outlet 12 in a flat shape, the dimension of the discharge outlet 12 in the first direction is much greater than the height of the discharge outlet 12 (i.e., the dimension in the third direction Z). For example, the dimension of the discharge outlet 12 in the first direction is more than ten times the height of the discharge outlet 12.

Illustratively, the coating head 11 may include a first mold 111 and a second mold 112 that are detachable. The first mold 111 and the second mold 112 are connected, for example, by screws, snaps, or the like. For example, the first mold 111 is provided with a first feed groove, a first accommodating groove, and a first discharge groove; the second mold 112 is provided with a second feed groove, a second accommodating groove, and a second discharge groove. After the first mold 111 and the second mold 112 are assembled opposite each other, the first feed groove and the second feed groove define, in an enclosing manner, the above feed inlet 13; the first accommodating groove and the second accommodating groove define, in an enclosing manner, the above accommodating cavity 15; the first discharge groove and the second discharge groove define, in an enclosing manner, the above discharge outlet 12. For another example, one of the first mold 111 and the second mold 112 (for example, the first mold 111) is provided with a first feed groove, a first accommodating groove, and a first discharge groove. After the first mold 111 and the second mold 112 are assembled opposite each other, the first feed groove and the other (for example, the second mold 112) define, in an enclosing manner, the above feed inlet 13; the first accommodating groove and the other define, in an enclosing manner, the above accommodating cavity 15; the first discharge groove and the other define, in an enclosing manner, the above discharge outlet 12. In some examples, the first mold 111 may be referred to as an upper mold and the second mold 112 may be referred to as a lower mold. In some examples, the shape of the coating head 11 may be a polygon (e.g., a rectangle), a circle, or the like. In one possible implementation, the shape of the coating head 11 is a rectangle, and the shape of the first mold 111 and the shape of the second mold 112 may both be a rectangle.

At least a part of the speed increasing mechanism is located in the accommodating cavity 15. For example, a part of the speed increasing mechanism is located in the accommodating cavity 15. For another example, the entire speed increasing mechanism is located in the accommodating cavity 15.

The speed increasing mechanism is configured to distribute the slurry entering from the feed inlet 13 in the first direction X. It can be understood that the slurry enters the accommodating cavity 15 via the feed inlet 13, and the speed increasing mechanism enables the slurry in the accommodating cavity 15 to flow in the first direction X. Therefore, the slurry is distributed relatively uniformly in the first direction X, and the accumulation of the slurry in the first direction X can be reduced.

The first direction X intersects with (e.g., is perpendicular to) the discharge direction of the discharge outlet 12. The discharge direction of the discharge outlet 12 may be parallel to (e.g., coincide with) the second direction Y. The discharge direction of the discharge outlet 12 can be understood as the centerline direction of the discharge outlet 12, or as the orientation direction of the discharge outlet 12. For example, the discharge outlet 12 is circular, and the discharge direction of the discharge outlet 12 can be understood as the centerline direction (i.e., the axial direction) of the discharge outlet 12. For another example, the discharge outlet 12 is rectangular, and the discharge direction of the discharge outlet 12 can be understood as the centerline direction of the discharge outlet 12. In addition, for the understanding of the feed direction of the feed inlet 13, reference can be made to related descriptions of the understanding of the discharge direction of the discharge outlet 12.

In some embodiments, the speed increasing mechanism may be a structure that increases the speed of the slurry in the accommodating cavity 15 and can distribute the slurry. Illustratively, the speed increasing mechanism may include a rotatable pipe provided with an inlet and a plurality of outlets. At least a part of the pipe is located in the accommodating cavity 15, and the inlet of the pipe is connected to the feed inlet 13, so that at least a part of the slurry can flow into the pipe. When the pipe rotates, the slurry in the pipe moves in the axial direction of the pipe, and is discharged from the outlet and enters the accommodating cavity 15 by means of the rotational force (or centrifugal force, or rotary force). For another example, the speed increasing mechanism may include a screw (to be distinguished from the screw of the screw feeding mechanism described below, the screw is referred to as a first screw 14, and the screw of the screw feeding mechanism may be referred to as a second screw 21). The following describes in detail the case where the speed increasing mechanism may include the first screw 14.

In some embodiments, referring to FIGs. 1 to 5, the speed increasing mechanism includes a screw (referred to as a first screw 14); the first screw 14 is at least partially located in the accommodating cavity 15; the axial direction of the first screw 14 is parallel to the first direction X. The first screw 14 located in the accommodating cavity 15 is configured to be rotatable in the accommodating cavity 15, so as to distribute the slurry entering from the feed inlet 13 in the first direction X, and the first screw 14 drives the distributed slurry to flow to the discharge outlet 12.

In this way, when the first screw 14 located in the accommodating cavity 15 rotates, the first screw 14 will drive the slurry located in the screw groove of the first screw 14 to flow in the axial direction (i.e., the first direction X) of the first screw 14. The rotary force (or centrifugal force) generated by the first screw 14 will enable the slurry located in the screw groove of the first screw 14 to flow in the radial direction (e.g., the second direction Y) of the first screw 14. In this way, a part of the slurry is distributed in the first direction, and a part of the slurry flows to the discharge outlet 12, thereby preventing the slurry from accumulating in the first direction X and increasing the speed at which the slurry flows to the discharge outlet 12.

The first screw 14 is at least partially located in the accommodating cavity 15. For example, a part of the first screw 14 is located in the accommodating cavity 15, and the other part is located outside the accommodating cavity 15. For another example, the first screw 14 is entirely located in the accommodating cavity 15. The axial direction of the first screw 14 is parallel to (coincides with) the first direction X.

The first screw 14 located in the accommodating cavity 15 is configured to distribute the slurry entering from the feed inlet 13 in the first direction X, and the first screw 14 located in the accommodating cavity 15 drives the distributed slurry to flow to the discharge outlet 12. It can be understood that when the first screw 14 located in the accommodating cavity 15 rotates, a part of the slurry will be driven to flow in the axial direction (e.g., the first direction) of the first screw 14, and another part of the slurry can also be driven to flow in the radial direction (e.g., the second direction) of the first screw 14.

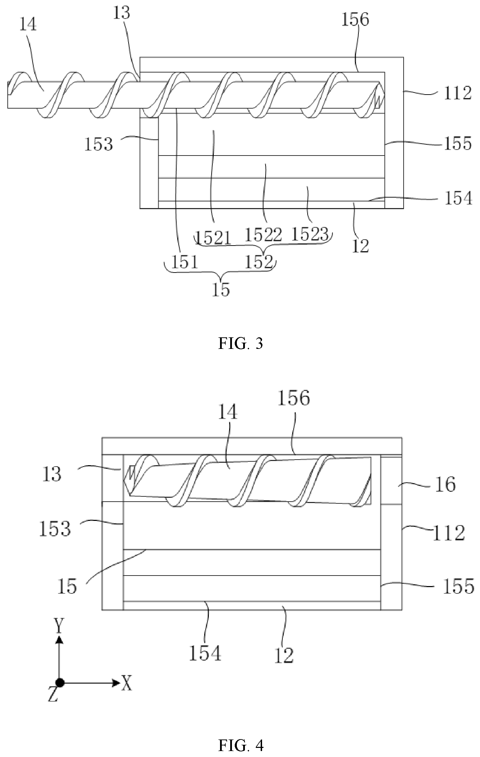

In some embodiments, referring to FIG. 3, the accommodating cavity 15 is provided with a first cavity wall 153 and a second cavity wall 154 adjacent to each other. The first cavity wall 153 intersects with the first direction X, and the second cavity wall 154 intersects with the second direction Y; the second direction Y intersects with the first direction X. The feed inlet 13 is located on the first cavity wall 153, and the discharge outlet 12 is located on the second cavity wall 154. The first screw 14 extends from the feed inlet 13 to the outside of the accommodating cavity 15. For example, the accommodating cavity 15 may be a rectangular cavity, and the accommodating cavity 15 is further provided with a third cavity wall 155 opposite to the first cavity wall 153 in the first direction X and a fourth cavity wall 156 opposite to the second cavity wall 154 in the second direction Y.

In this way, the part of the first screw 14 located outside the accommodating cavity 15 can drive the part of the first screw 14 located in the accommodating cavity 15 to rotate. When the part of the first screw 14 located outside the accommodating cavity 15 rotates, the part of the first screw 14 located outside the accommodating cavity 15 can serve to convey the slurry to the accommodating cavity 15. That is, the part of the first screw 14 located outside the accommodating cavity 15 conveys the slurry located outside the accommodating cavity 15 into the accommodating cavity 15 via the feed inlet 13. At the same time, the part of the first screw 14 located in the accommodating cavity 15 serves to distribute the slurry in the first direction X. Therefore, the first screw 14 in these embodiments is configured to convey the slurry into the accommodating cavity 15, and is further configured to distribute the slurry in the accommodating cavity 15 in the first direction X. In this case, the first direction X may be understood as the axial direction of the first screw 14, and the first screw 14 is directed from the first cavity wall 153 to the third cavity wall 155.

In some examples, the first screw 14 in these embodiments may be the second screw 21 of the screw feeding mechanism described below. That is, the part of the first screw 14 located outside the accommodating cavity 15 and the part of the first screw 14 located in the accommodating cavity 15 may both be the second screw 21 of the screw feeding mechanism. In this way, a part of the second screw 21 of the screw feeding mechanism located outside the accommodating cavity 15 serves to deliver the slurry into the accommodating cavity 15, and a part of the second screw 21 of the screw feeding mechanism located in the accommodating cavity 15 can serve to distribute the slurry in the first direction X.

In some other examples, the second screw 21 of the screw feeding mechanism described below may be the part of the first screw 14 located outside the accommodating cavity 15 in these embodiments, but not the part of the first screw 14 located in the accommodating cavity 15. That is, the second screw 21 of the screw feeding mechanism serves to deliver slurry into the accommodating cavity 15. However, the part of the first screw 14 located outside the accommodating cavity 15 and the part of the first screw 14 located in the accommodating cavity 15 may be connected by means of welding, insertion, threaded connection, or the like, and are not necessarily of an integrally formed structure.

The first cavity wall 153 intersects with (e.g., is perpendicular to) the first direction X, and the second cavity wall 154 intersects with (e.g., is perpendicular to) the second direction Y. For example, the first cavity wall 153 intersects with (e.g., is perpendicular to) the second cavity wall 154 and is connected thereto. The feed inlet 13 is located on the first cavity wall 153, and the first screw 14 extends from the feed inlet 13 to the outside of the accommodating cavity 15. That is, the feed direction of the feed inlet 13 coincides with the axial direction of the first screw 14. For example, the feed direction of the feed inlet 13 intersects with (e.g., is perpendicular to) the discharge direction of the discharge outlet 12.

Illustratively, the first screw 14 extends to be close to the third cavity wall 155. For another example, the first screw 14 extends to be inserted into the third cavity wall 155. For another example, the first screw 14 extends to the outside of the accommodating cavity via the third cavity wall 155. In this way, the dimension of the first screw 14 in the accommodating cavity 15 in the first direction X is increased, so that the first screw 14 can distribute more slurry.

In some embodiments, the part of the first screw 14 located in the accommodating cavity 15 is fixedly or detachably connected to the part of the first screw 14 located outside the accommodating cavity 15. In this way, the part of the first screw 14 located in the accommodating cavity 15 and the part of the first screw 14 located outside the accommodating cavity 15 rotate coaxially and together.

The part of the first screw 14 located in the accommodating cavity 15 is fixedly connected to the part of the first screw 14 located outside the accommodating cavity 15. It can be understood that the part of the first screw 14 located in the accommodating cavity 15 and the part of the first screw 14 located outside the accommodating cavity 15 rotate coaxially and together and are inseparable. For example, the part of the first screw 14 located in the accommodating cavity 15 and the part of the first screw 14 located outside the accommodating cavity 15 are of an integrally formed structure. For another example, the part of the first screw 14 located in the accommodating cavity 15 is connected to the part of the first screw 14 located outside the accommodating cavity 15 by welding.

The part of the first screw 14 located in the accommodating cavity 15 is detachably connected to the part of the first screw 14 located outside the accommodating cavity 15. It can be understood that the part of the first screw 14 located in the accommodating cavity 15 and the part of the first screw 14 located outside the accommodating cavity 15 rotate coaxially and together and can be separated. For example, the part of the first screw 14 located in the accommodating cavity 15 is connected to the part of the first screw 14 located outside the accommodating cavity 15 by insertion. For another example, the part of the first screw 14 located in the accommodating cavity 15 is threadedly connected to the part of the first screw 14 located outside the accommodating cavity 15, and the screwing direction of the threaded connection is the same as the reverse direction of the rotation of the first screw 14.

In some embodiments, referring to FIG. 4, the accommodating cavity 15 is provided with a mounting port 16, a first cavity wall 153, a second cavity wall 154, and a third cavity wall 155. The first cavity wall 153 and the third cavity wall 155 are disposed opposite to each other in the first direction X, and the second cavity wall 154 intersects with the second direction Y; the second direction Y intersects with the first direction X. The feed inlet 13 is located on the first cavity wall 153, the discharge outlet 12 is located on the second cavity wall 154, and the mounting port 16 is located on the third cavity wall 155. The first screw 14 passes through the mounting port 16 and is disposed between the first cavity wall 153 and the third cavity wall 155.

In this way, the first screw 14 only serves to distribute the slurry in the accommodating cavity 15 in the first direction X, and does not serve to transfer the slurry into the accommodating cavity 15. For example, the slurry can be conveyed into the accommodating cavity 15 via the feed inlet 13 by the extruder described below. The feed inlet 13 is located on the first cavity wall 153, and the slurry enters the accommodating cavity 15 via the feed inlet 13 located on the first cavity wall 153. The slurry entering from the feed inlet 13 may directly fall on the first screw 14 and be distributed by the first screw 14 in the first direction X; or, the first screw 14 distributes the slurry located in the accommodating cavity 15 in the first direction X. In this case, the first direction X may be understood as the axial direction of the first screw 14, and is directed from the first cavity wall 153 to the third cavity wall 155, i.e., unidirectional distribution.

The material supply mechanism 2 (for example, the second screw 21 of the screw feeding mechanism) described below and the first screw 14 in these embodiments rotate separately, that is, do not interfere with each other. Therefore, the first screw 14 may be connected to the driving member 3 described below by means of the mounting port 16; that is, the first screw 14 in the accommodating cavity 15 may rotate by means of the driving member 3.

Illustratively, a seal is provided between the first screw 14 and the mounting port 16. For example, a sealing structure (e.g., a seal ring or a sealing bearing) is provided between the first screw 14 and the mounting port 16 to prevent the slurry from leaking out. The sealing structure may be a seal ring, a sealing bearing, or the like.

The first cavity wall 153 and the third cavity wall 155 are disposed opposite to each other in the first direction X. It can be understood that the first cavity wall 153 and the third cavity wall 155 are arranged in the first direction X, and both the first cavity wall 153 and the third cavity wall 155 intersect with (e.g., are perpendicular to) the first direction X. For example, the second cavity wall 154 is located between the first cavity wall 153 and the third cavity wall 155, and is connected to both the first cavity wall 153 and the third cavity wall 155.

Illustratively, the feed inlet 13 is located on the first cavity wall 153, and the first screw 14 passes through the mounting port 16 and is disposed between the first cavity wall 153 and the third cavity wall 155. It can be understood that the axial direction of the first screw 14 coincides with the centerline of the mounting port 16, and the axial direction of the first screw 14 intersects with (e.g., is perpendicular to) both the first cavity wall 153 and the third cavity wall 155, and is located between the first cavity wall 153 and the third cavity wall 155. For the understanding of the centerline of the mounting port 16, reference can be made to related descriptions of the feed direction of the feed inlet 13. In some examples, the feed direction of the feed inlet 13 is parallel to or coincides with the axial direction of the first screw 14; the feed direction of the feed inlet 13 intersects with (e.g., is perpendicular to) the discharge direction of the discharge outlet 12.

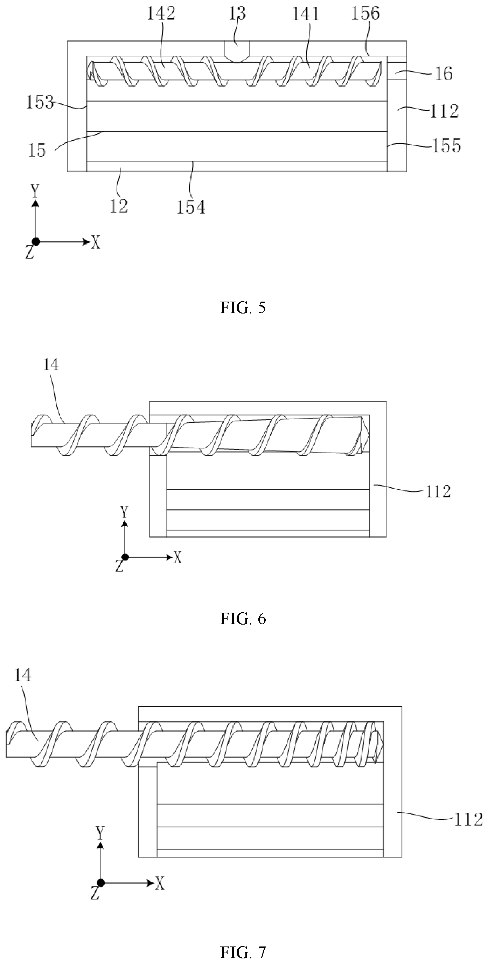

In some embodiments, referring to FIG. 5, the accommodating cavity 15 is provided with a mounting port 16, a first cavity wall 153, a second cavity wall 154, a third cavity wall 155, and a fourth cavity wall 156. The first cavity wall 153 and the third cavity wall 155 are disposed opposite to each other in the first direction X, and the second cavity wall 154 and the fourth cavity wall 156 are disposed opposite to each other in the second direction Y; the second direction Y intersects with the first direction X. The feed inlet 13 is located on the fourth cavity wall 156, and the discharge outlet 12 is located on the second cavity wall 154. The mounting port 16 is located on the first cavity wall 153 or the third cavity wall 155, and the first screw 14 passes through the mounting port 16 and is disposed between the first cavity wall 153 and the third cavity wall 155.

In this way, the first screw 14 only serves to distribute the slurry in the accommodating cavity 15 in the first direction X, and does not serve to transfer the slurry into the accommodating cavity 15. For example, the slurry can be conveyed into the accommodating cavity 15 via the feed inlet 13 by the extruder described below. The feed inlet 13 is located on the fourth cavity wall 156, and the slurry enters the accommodating cavity 15 via the feed inlet 13 located on the fourth cavity wall 156. The slurry entering from the feed inlet 13 may directly fall on the first screw 14 and be distributed by the first screw 14 in the first direction X; or, the first screw 14 distributes the slurry located in the accommodating cavity 15 in the first direction X. In this case, the first direction X may be understood as the axial direction of the first screw 14, and the first screw 14 distributes the slurry to one side of the first cavity wall 153 and the first screw 14 distributes the slurry to one side of the third cavity wall 155 at the same time, i.e., bidirectional distribution.

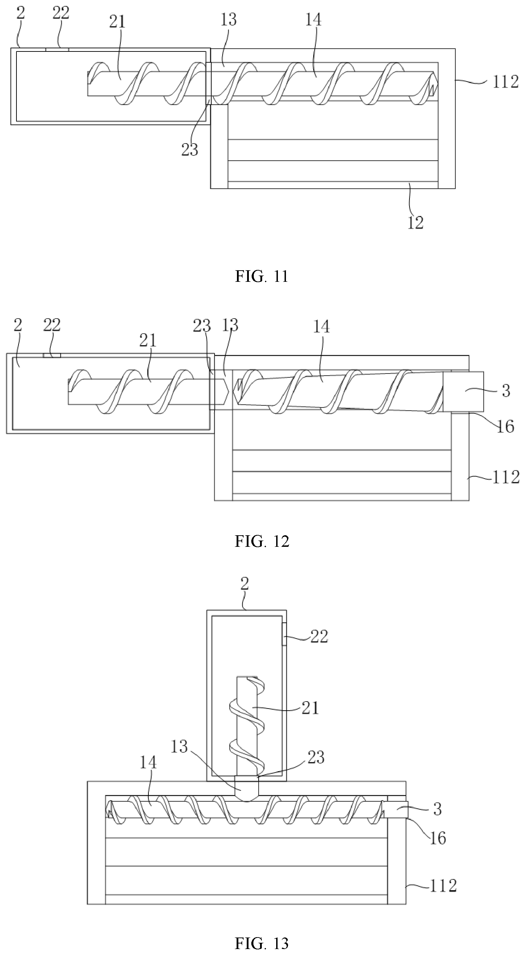

The material supply mechanism 2 (for example, the second screw 21 of the screw feeding mechanism) as shown in FIG. 12 and the first screw 14 in these embodiments rotate separately, that is, do not interfere with each other. Therefore, the first screw 14 may be connected to the driving member 3 described below by means of the mounting port 16; that is, the first screw 14 in the accommodating cavity 15 may rotate by means of the driving member 3.

The first cavity wall 153 and the third cavity wall 155 are disposed opposite to each other in the first direction X. It can be understood that the first cavity wall 153 and the third cavity wall 155 are arranged in the first direction X, and both the first cavity wall 153 and the third cavity wall 155 intersect with (e.g., are perpendicular to) the first direction X. The second cavity wall 154 and the fourth cavity wall 156 are disposed opposite to each other in the second direction Y. It can be understood that the second cavity wall 154 and the fourth cavity wall 156 are arranged in the second direction Y, and both the second cavity wall 154 and the fourth cavity wall 156 intersect with (e.g., are perpendicular to) the second direction Y.

Illustratively, any two cavity walls may be in contact connection. For example, the second cavity wall 154 and the fourth cavity wall 156 are both located between the first cavity wall 153 and the third cavity wall 155, and are both connected to the first cavity wall 153 and the third cavity wall 155. In this way, the first cavity wall 153, the second cavity wall 154, the third cavity wall 155, and the fourth cavity wall 156 may be connected to form a rectangle.

For another example, any two cavity walls are connected by another cavity wall. For example, a fifth cavity wall is further provided, and the first cavity wall 153 and the second cavity wall 154 are connected by, for example, the fifth cavity wall, so that the first cavity wall 153, the second cavity wall 154, the third cavity wall 155, the fourth cavity wall 156, and the fifth cavity wall may be connected to form a pentagon.

The feed inlet 13 is located on the fourth cavity wall 156, and the discharge outlet 12 is located on the second cavity wall 154. For example, the feed direction of the feed inlet 13 is parallel to (e.g., coincides with) the discharge direction of the discharge outlet 12, and the feed direction of the feed inlet 13 intersects with (e.g., is perpendicular to) the axial direction of the first screw 14. The centerline of the mounting port 16 coincides with the axial direction of the first screw 14.

In some embodiments, with continued reference to FIG. 5, the first screw 14 includes a first sub-screw 141 and a second sub-screw 142, and the first sub-screw 141 and the second sub-screw 142 are located on two opposite sides of the feed inlet 13 in the first direction X, respectively. The first sub-screw 141 and the second sub-screw 142 are fixedly connected or detachably connected, and the first sub-screw 141 and the second sub-screw 142 have opposite spiral directions and are configured to rotate in the same direction. Alternatively, the first sub-screw 141 and the second sub-screw 142 are separate structures, and the first sub-screw 141 and the second sub-screw 142 have the same spiral direction and are configured to rotate in opposite directions.

In this way, the slurry enters from the feed inlet 13, and is distributed by the first sub-screw 141 in the arrow direction of the first direction X, and is also distributed by the second sub-screw 142 in the opposite direction of the arrow of the first direction X. Therefore, the slurry at the feed inlet 13 is reduced, and material accumulation at the feed inlet 13 is avoided. It can be understood that the uniformity of slurry distribution by the first screw 14 located in the accommodating cavity 15 in the first direction X is ensured. In the case that the length of the first screw 14 located in the accommodating cavity 15 is the same, disposing the feed inlet 13 in the middle of the fourth cavity wall 156, as compared to disposing it on the first cavity wall 153, can enable a more uniform distribution of the slurry in the first direction X. If the lengths of the first sub-screw 141 and the second sub-screw 142 in FIG. 5 are both equal to the length of the first screw 14 located in the accommodating cavity 15 in FIGs. 1 to 4, that is, the length of the first screw 14 located in the accommodating cavity 15 in FIG. 5 is twice the length of the first screw 14 located in the accommodating cavity 15 in FIGs. 1 to 4, the coating mechanism in FIG. 5 can realize the same distribution uniformity over twice the width (the dimension in the first direction X) of the accommodating cavity 15 of the coating mechanism in FIGs. 1 to 4.

Illustratively, the screw includes a first sub-screw 141 and a second sub-screw 142, and the first sub-screw 141 and the second sub-screw 142 are located on two opposite sides of the feed inlet 13 in the first direction X, respectively. The first sub-screw 141 and the second sub-screw 142 are fixedly connected or detachably connected, and the first sub-screw 141 and the second sub-screw 142 have opposite spiral directions.

The first sub-screw 141 is connected to the second sub-screw 142. In some examples, the first sub-screw 141 and the second sub-screw 142 are fixedly connected. For example, the first sub-screw 141 and the second sub-screw 142 are welded. For another example, the first sub-screw 141 and the second sub-screw 142 are of an integrated structure. In some other examples, the first sub-screw 141 and the second sub-screw 142 are detachably connected; for example, the first sub-screw 141 and the second sub-screw 142 are connected by insertion. For another example, the first sub-screw 141 and the second sub-screw 142 are threadedly connected, and the screwing direction of the threaded connection is the same as the rotation direction of the first sub-screw 141.

In the case that the first sub-screw 141 and the second sub-screw 142 are fixedly connected, the first sub-screw 141 and the second sub-screw 142 have opposite spiral directions. In this way, the first sub-screw 141 and the second sub-screw 142 rotate in the same direction, and the slurry is distributed in the first direction X from the side of the feed inlet 13 pointing to the first cavity wall 153 and from the side of the feed inlet 13 pointing to the third cavity wall 155, respectively.

For example, when one mounting port 16 is provided and one driving member 3 is provided, the first sub-screw 141 and the second sub-screw 142 are coaxially connected; the first sub-screw 141 and the second sub-screw 142 have opposite spiral directions; the one driving member 3 drives the first sub-screw 141 and the second sub-screw 142 to rotate synchronously by means of the one mounting port 16.

For another example, the screw includes a first sub-screw 141 and a second sub-screw 142, and the first sub-screw 141 and the second sub-screw 142 are located on two opposite sides of the feed inlet 13 in the first direction X, respectively. The first sub-screw 141 and the second sub-screw 142 are separate structures, and the first sub-screw 141 and the second sub-screw 142 have the same spiral direction and are configured to rotate in opposite directions.

The first sub-screw 141 and the second sub-screw 142 are separate structures, that is, the first sub-screw 141 and the second sub-screw 142 do not interfere with each other's rotation.

The first sub-screw 141 and the second sub-screw 142 are separate structures, and the first sub-screw 141 and the second sub-screw 142 have the same spiral direction and are configured to rotate in opposite directions. In this way, the first sub-screw 141 and the second sub-screw 142 are driven, respectively, and the rotation directions of the two are opposite, so that the first sub-screw 141 distributes the slurry in the first direction X from the side of the feed inlet 13 pointing to the first cavity wall 153; meanwhile, the second sub-screw 142 distributes the slurry in the first direction X from the side of the feed inlet 13 pointing to the third cavity wall 155.

For example, when two mounting ports 16 are provided and located on the first cavity wall 153 and the third cavity wall 155, respectively, and two of the driving members 3 described below are provided, the two mounting ports 16 may be disposed opposite to each other, and the first sub-screw 141 is separated from the second sub-screw 142; one driving member 3 drives the first sub-screw 141 to rotate by means of one mounting port 16, and the other driving member 3 drives the second sub-screw 142 to rotate by means of the other mounting port 16.

In some embodiments, in the case that the first sub-screw 141 and the second sub-screw 142 are fixedly connected or detachably connected, the first sub-screw 141 and the second sub-screw 142 are of a symmetrical structure. It can be understood that the first sub-screw 141 and the second sub-screw 142 have different spiral directions, and other parameters (such as length, diameter, groove depth of the screw groove, and lead) are the same. In this way, the first sub-screw 141 and the second sub-screw 142 can uniformly distribute the slurry entering from the feed inlet 13; that is, the slurry on the side proximal to the first cavity wall 153 is approximately the same as or as much as the slurry on the side proximal to the third cavity wall 155.

In some embodiments, the accommodating cavity 15 is further provided with a second cavity wall 154 and a fourth cavity wall 156, and the second cavity wall 154 and the fourth cavity wall 156 are disposed opposite to each other in the second direction Y; the discharge outlet 12 is located on the second cavity wall 154, and the first screw 14 is proximal to the fourth cavity wall 156. In this way, the slurry thrown out by the first screw 14 to the side of the fourth cavity wall 156 can be reduced. The first screw 14 being proximal to the fourth side in the accommodating cavity 15 may be understood as that there is a small gap between the first screw 14 and the fourth cavity wall 156. The small gap may be 2 to 10 (e.g., 2, 4, 6, 8, or 10) times the maximum particle size of the components of the slurry, for example, 1 mm, 5 mm, 10 mm, 20 mm, 30 mm, 40 mm, 50 mm, 100 mm, 200 mm, or 500 mm.

In some embodiments, referring to FIGs. 6 and 7, in the accommodating cavity 15, the lead of the first screw 14 gradually decreases in a direction away from the feed inlet 13 in the first direction X; and/or, the groove depth of the screw groove of the first screw 14 gradually decreases. In this way, the flow velocity of the slurry in the first direction from the groove depth of the screw groove of the first screw 14 to the discharge outlet is relatively consistent, so that the extrusion speed at the discharge outlet is substantially the same or the same. That is, in the first direction X, the flow velocity uniformity of the slurry flowing out from the first screw 14 is better on the side facing the discharge outlet 12.

Illustratively, referring to FIG. 7, in the accommodating cavity 15, the lead of the first screw 14 gradually decreases in a direction away from the feed inlet 13 in the first direction X.

For another example, referring to FIG. 6, in the accommodating cavity 15, the groove depth of the screw groove of the first screw 14 gradually decreases in a direction away from the feed inlet 13 in the first direction X.

For another example, in the accommodating cavity 15, the lead of the first screw 14 gradually decreases in a direction away from the feed inlet 13 in the first direction X, and the groove depth of the screw groove of the first screw 14 gradually decreases.

In some embodiments, the speed increasing mechanism (e.g., the first screw 14) is spaced apart from the discharge outlet 12; that is, there is a gap between the speed increasing mechanism and the discharge outlet 12. For example, the first screw 14 is spaced apart from the discharge outlet 12. In this way, the coating head 11 can store some slurry, preventing the slurry entering from the feed inlet 13 from directly discharging via the discharge outlet 12. This results in a better coating effect.

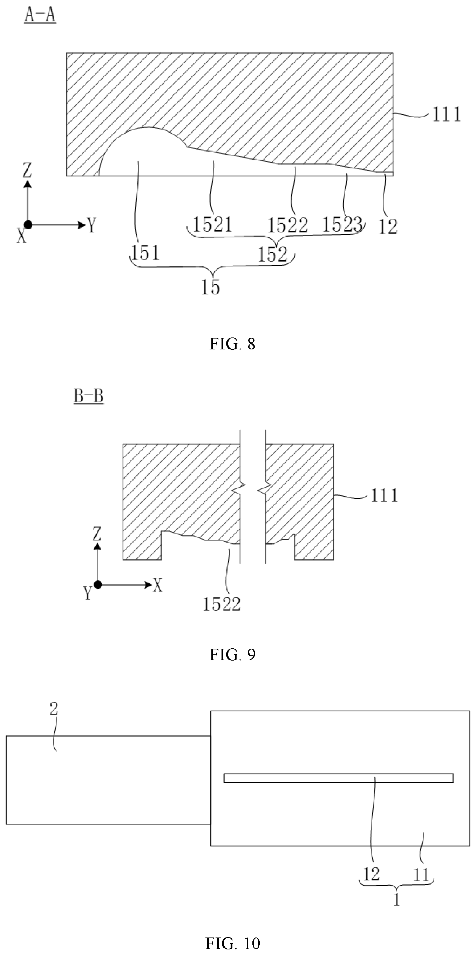

In some embodiments, referring to FIGs. 2 and 8, in the second direction Y, the accommodating cavity 15 includes a receiving cavity 151 receiving at least a part of the first screw 14 and an extrusion cavity 152; the discharge outlet 12 is located on the cavity wall on the side of the extrusion cavity 152 distal to the receiving cavity 151. In the third direction Z, the dimension of the junction between the extrusion cavity 152 and the receiving cavity 151 is more than twice (e.g., twice, 3 times, or 4 times) the dimension of the discharge outlet 12; the second direction Y intersects with the first direction X and the third direction Z, and the third direction Z intersects with the second direction Y. The provided extrusion cavity 152 can further compress the slurry, so that the slurry is more uniform. In the third direction Z, the dimension of the junction between the extrusion cavity 152 and the receiving cavity 151 is more than twice the dimension of the discharge outlet 12, so that the discharge outlet 12 can well discharge the slurry, avoiding intermittent discharge of the slurry; the uniformity of the slurry discharged from the discharge outlet 12 is good.

In some embodiments, referring to FIGs. 2, 8, and 9, in the direction from the receiving cavity 151 to the discharge outlet 12 (i.e., the arrow direction of the second direction Y, or the opposite direction of the arrow of the second direction Y), the extrusion cavity 152 includes a first compression cavity 1521, a damping cavity 1522, and a second compression cavity 1523 that are in communication with each other sequentially. The discharge outlet 12 is located on the cavity wall on the side of the second compression cavity 1523 distal to the receiving cavity 151; in the direction from the receiving cavity 151 to the discharge outlet 12, the dimension of the first compression cavity 1521 in the third direction Z is greater than the dimension of the second compression cavity 1523 in the third direction Z; in the first direction X, the dimension of the damping cavity 1522 in the third direction Z (i.e., the height of the damping cavity 1522) first decreases and then increases.

In this way, the slurry is discharged from the receiving cavity 151, and is compressed by the first compression cavity 1521, the damping cavity 1522, and the second compression cavity 1523 sequentially, so that the slurry is compressed multiple times, and the slurry is re-adhered or combined into a film, and finally discharged from the discharge outlet 12. The dimension of the provided first compression cavity 1521 in the third direction Z is greater than the dimension of the second compression cavity 1523 in the third direction Z, so that two compression processes can be implemented.

Referring to FIG. 9, in the first direction X, the dimension of the damping cavity 1522 in the third direction Z first decreases and then increases. That is, the space (or volume) of the damping cavity 1522 proximal to the first cavity wall 153 and the third cavity wall 155 is larger than the space (or volume) of the damping cavity 1522 located between the first cavity wall 153 and the third cavity wall 155. In this way, the damping cavity 1522 can apply different flow resistances to the slurry in the first direction, so that the extrusion speed at the discharge outlet is more uniform. Therefore, the provided damping cavity 1522 can play a role in well distributing the slurry, avoiding the problem of material accumulation at a part of the damping cavity 1522 and no slurry at another part of the damping cavity 1522.

There is a large amount of slurry near the first cavity wall 153 and the third cavity wall 155, and there is a small amount of slurry between the first cavity wall 153 and the third cavity wall 155. It can be understood that in the case of unidirectional distribution, the feed inlet 13 is located on the first cavity wall 153, and the slurry is distributed to one side of the third cavity wall 155. If the first screw 14 does not distribute the slurry from the feed inlet 13 in time, a part of the slurry will flow directly from the feed inlet 13 to the discharge outlet 12, and will not be distributed along the first screw 14, so that there is a large amount of slurry near the first cavity wall 153 and near the third cavity wall 155. In the case of bidirectional distribution, the feed inlet 13 is located on the fourth cavity wall 156, and the efficiency of slurry distribution of the feed inlet 13 can be increased by the first sub-first screw 14 and the second sub-first screw 14, thereby reducing the slurry flowing directly from the feed inlet 13 to the discharge outlet 12. However, after bidirectional distribution, there is more slurry near the first cavity wall 153 and the third cavity wall 155.

Illustratively, on the first mold 111 or the second mold 112, the cross sections of the first compression cavity 1521, the damping cavity 1522, and the second compression cavity 1523 are polylines. The cross sections are parallel to a plane where the second direction Y and the third direction Z are located.

Illustratively, in the first direction X, the dimension of the damping cavity 1522 in the third direction Z first gradually decreases and then gradually increases.

In some embodiments, with continued reference to FIGs. 1 and 2, the shape of the discharge outlet 12 is a flat shape, and the length direction of the discharge outlet 12 is the first direction X. That is, the axial direction of the first screw 14 is directly opposite to the length direction of the discharge outlet 12. In this way, the slurry subjected to distribution is substantially flat, and the flat slurry can flow into the discharge outlet 12 directly, so that the slurry can flow out from the flat coating port, avoiding the problem that no slurry is discharged at some parts of the coating port. For example, the flat shape may be a flat quadrangle (i.e., a rectangle), and the first direction X may be the extension direction of the long side of the rectangle. For another example, the flat shape may be an ellipse, and the first direction X may be the extension direction of the major axis of the ellipse.

The embodiments of the present application further provide a coating device. Illustratively, the coating device may coat the surface of the electrode plate of the battery, so that a coating layer is formed on the surface of the electrode plate of the battery. The function of the coating layer varies depending on the material of the slurry. For example, when the material of the slurry is an adsorptive material, the coating layer is an adsorption layer. The adsorption layer can adsorb ions, so that the electrode plate can store more ions. For another example, when the material of the slurry is a protective material, the coating layer is a protective layer. The protective layer can protect the electrode plate, reduce the reaction speed of the redox reaction of the electrode plate, or prevent the electrode plate from reacting. For another example, the coating device may coat a structure that needs to be coated. For example, the coating device may be used to coat an integrated circuit board, which may reduce corrosion of the circuit board caused by water and oxygen. In this case, the slurry may be a resin adhesive, and the resin adhesive is applied on the circuit board to isolate water and oxygen.

Referring to FIG. 10, the coating device may include a coating mechanism 1 and a material supply mechanism 2, and the material supply mechanism 2 is configured to convey slurry to a feed inlet 13 of the coating mechanism 1. In this way, the slurry can be conveyed into the feed inlet 13 of the coating mechanism 1 by the material supply mechanism 2, so that the coating mechanism 1 can apply the slurry.

Illustratively, the material supply mechanism 2 includes a supply cavity provided with a supply inlet 22 and a supply outlet 23. The supply outlet is connected to the feed inlet 13 of the coating mechanism 1. In this way, the slurry in the material supply mechanism 2 can be discharged via the supply outlet 23 and enter the feed inlet 13 in the coating mechanism 1, so that the material supply mechanism 2 feeds the coating mechanism 1.

Illustratively, the material supply mechanism 2 may convey the slurry and the like by means of screw feeding, belt conveying, or the like. For example, referring to FIGs. 10 to 13, when the material supply mechanism 2 can convey the slurry by means of screw feeding, the material supply mechanism 2 can be referred to as a screw feeding mechanism in this case, and the screw feeding mechanism is provided with a screw (which can be referred to as a second screw 21). For example, the screw feeding mechanism may be an extruder with a screw. In this case, the second screw 21 of the screw feeding mechanism is used to convey the slurry to the feed inlet 13 of the coating mechanism 1.

In some embodiments, referring to FIGs. 10 and 11, in the case that the first screw 14 of the coating mechanism 1 extends from the feed inlet 13 to the outside of the accommodating cavity 15, the material supply mechanism 2 is a screw feeding mechanism configured to drive the first screw 14 in the coating mechanism 1 to rotate. In this way, the screw feeding mechanism can serve to supply material to the coating mechanism 1, and can also serve to drive the first screw 14 of the coating mechanism 1 to distribute the slurry in the first direction X.

Illustratively, the accommodating cavity 15 is provided with a first cavity wall 153 and a second cavity wall 154; the first cavity wall 153 intersects with the first direction X, and the second cavity wall 154 intersects with the second direction Y; the second direction Y intersects with the first direction X. The feed inlet 13 is located on the first cavity wall 153, and the discharge outlet 12 is located on the second cavity wall 154. The first screw 14 extends from the feed inlet 13 to the outside of the accommodating cavity 15. The material supply mechanism 2 is a screw feeding mechanism configured to drive the first screw 14 in the coating mechanism 1 to rotate.

In some examples, the second screw 21 of the screw feeding mechanism is fixedly connected to the first screw 14 of the coating mechanism 1. For example, the second screw 21 of the screw feeding mechanism and the first screw 14 of the coating mechanism 1 are of an integrated structure; that is, the second screw 21 of the screw feeding mechanism extends into the accommodating cavity 15 of the coating head 11 via the feed inlet 13 to form the first screw 14 located in the coating head 11. For another example, the second screw 21 of the screw feeding mechanism is coaxially welded to the first screw 14 of the coating mechanism 1.

In some other examples, the second screw 21 of the screw feeding mechanism is detachably connected to the first screw 14 of the coating mechanism 1. For example, the second screw 21 of the screw feeding mechanism is connected to the first screw 14 of the coating mechanism 1 by insertion. For another example, the second screw 21 of the screw feeding mechanism is threadedly connected to the first screw 14 of the coating mechanism 1.

In some embodiments, referring to FIGs. 12 and 13, in the case that the coating mechanism 1 is provided with a mounting port 16, the feed inlet 13 of the coating mechanism 1 is located on the first cavity wall 153 as shown in FIG. 12, or the feed inlet 13 is located on the fourth cavity wall 156 as shown in FIG. 13. The coating device further includes a driving member 3, the driving member 3 is connected to the first screw 14 of the coating mechanism 1 via the mounting port 16 of the coating mechanism 1, and the driving member 3 is configured to drive the first screw 14 of the coating mechanism 1 to rotate.

Illustratively, referring to FIG. 12, the accommodating cavity 15 is provided with a mounting port 16, a first cavity wall 153, a second cavity wall 154, and a third cavity wall 155. The first cavity wall 153 and the third cavity wall 155 are disposed opposite to each other in the first direction X, and the second cavity wall 154 intersects with the second direction Y; the second direction Y intersects with the first direction X. The feed inlet 13 is located on the first cavity wall 153, the discharge outlet 12 is located on the second cavity wall 154, and the mounting port 16 is located on a third side wall. The first screw 14 passes through the mounting port 16 and is disposed between the first cavity wall 153 and the third cavity wall 155. The coating device further includes a driving member 3, the driving member 3 is connected to the first screw 14 of the coating mechanism 1 via the mounting port 16 of the coating mechanism 1, and the driving member 3 is configured to drive the first screw 14 of the coating mechanism 1 to rotate.

For another example, referring to FIG. 13, the accommodating cavity 15 is provided with a mounting port 16, a first cavity wall 153, a second cavity wall 154, a third cavity wall 155, and a fourth cavity wall 156. The first cavity wall 153 and the third cavity wall 155 are disposed opposite to each other in the first direction X, and the second cavity wall 154 and the fourth cavity wall 156 are disposed opposite to each other in the second direction Y; the second direction Y intersects with the first direction X. The feed inlet 13 is located on the fourth cavity wall 156, and the discharge outlet 12 is located on the second cavity wall 154. The mounting port 16 is located on the first cavity wall 153 or the third cavity wall 155, and the first screw 14 passes through the mounting port 16 and is disposed between the first cavity wall 153 and the third cavity wall 155. The coating device further includes a driving member 3, the driving member 3 is connected to the first screw 14 of the coating mechanism 1 via the mounting port 16 of the coating mechanism 1, and the driving member 3 is configured to drive the first screw 14 of the coating mechanism 1 to rotate.

In some examples, the driving member 3 may be a drive motor, a drive motor, or the like. In some examples, the driving member 3 may be connected to the first screw 14 of the coating mechanism 1 by means of a speed changing mechanism, and the speed changing mechanism may be used to adjust the rotation speed of the first screw 14.

The above descriptions are merely embodiments of the present application and do not thereby limit the scope of patent protection of the present application. Any equivalent structures or equivalent process changes made based on the content of the specification and drawings of the present application, or any direct or indirect application in other related technical fields, shall likewise be included within the scope of patent protection of the present application.

## Claims

1. A coating mechanism, comprising:
a coating head, provided with an accommodating cavity, wherein a cavity wall of the accommodating cavity is provided with a feed inlet and a discharge outlet; and
a speed increasing mechanism, wherein at least a part of the speed increasing mechanism is located in the accommodating cavity; the speed increasing mechanism is configured to distribute a slurry entering from the feed inlet in a first direction, the first direction intersecting with a discharge direction of the discharge outlet.

2. The coating mechanism according to claim 1, wherein
the speed increasing mechanism comprises a screw; the screw is at least partially located in the accommodating cavity; an axial direction of the screw is parallel to a first direction, and a screw located in the accommodating cavity is configured to distribute a slurry entering from the feed inlet in the first direction and drive the distributed slurry to flow to the discharge outlet.

3. The coating mechanism according to claim 2, wherein
the accommodating cavity is provided with a first cavity wall and a second cavity wall; the first cavity wall intersects with the first direction, and the second cavity wall intersects with a second direction; the second direction intersects with the first direction;
the feed inlet is located on the first cavity wall, and the discharge outlet is located on a second cavity wall; the screw extends from the feed inlet to an outside of the accommodating cavity; a part of the screw located outside the accommodating cavity is configured to convey a slurry into the accommodating cavity.

4. The coating mechanism according to claim 3, wherein
a part of the screw located in the accommodating cavity is fixedly connected or detachably connected to the part of the screw located outside the accommodating cavity.

5. The coating mechanism according to claim 2, wherein
the accommodating cavity is provided with a mounting port, a first cavity wall, a second cavity wall, and a third cavity wall; the first cavity wall and the third cavity wall are disposed opposite to each other in the first direction, and the second cavity wall intersects with a second direction; the second direction intersects with the first direction;
the feed inlet is located on the first cavity wall, the discharge outlet is located on a second cavity wall, and the mounting port is located on a third side wall; the screw passes through the mounting port and is disposed between the first cavity wall and the third cavity wall.

6. The coating mechanism according to claim 2, wherein
the accommodating cavity is provided with a mounting port, a first cavity wall, a second cavity wall, a third cavity wall, and a fourth cavity wall; the first cavity wall and the second cavity wall are disposed opposite to each other in the first direction, and the second cavity wall and the fourth cavity wall are disposed opposite to each other in a second direction; the second direction intersects with the first direction;
the feed inlet is located on the fourth cavity wall, and the discharge outlet is located on a second cavity wall; the mounting port is located on a first cavity wall or the third cavity wall, and the screw passes through the mounting port and is disposed between the first cavity wall and the third cavity wall.

7. The coating mechanism according to claim 6, wherein
the screw comprises a first sub-screw and a second sub-screw, and the first sub-screw and the second sub-screw are located on two opposite sides of the feed inlet in the first direction, respectively,
wherein the first sub-screw and the second sub-screw are fixedly connected or detachably connected, and the first sub-screw and the second sub-screw have opposite spiral directions;
or,
the first sub-screw and the second sub-screw are separate structures, and the first sub-screw and the second sub-screw have a same spiral direction and are configured to rotate in opposite directions.

8. The coating mechanism according to claim 7, wherein
in a case that the first sub-screw and the second sub-screw are fixedly connected or detachably connected, the first sub-screw and the second sub-screw are of a symmetrical structure.

9. The coating mechanism according to claim 2, wherein
the accommodating cavity is further provided with a second cavity wall and a fourth cavity wall, and the second cavity wall and the fourth cavity wall are disposed opposite to each other in a second direction; the discharge outlet is located on the second cavity wall, and the screw is proximal to the fourth cavity wall.

10. The coating mechanism according to claim 2, wherein
in the accommodating cavity, in a direction away from the feed inlet in the first direction,
a lead of the screw gradually decreases; and/or a groove depth of a screw groove of the screw gradually decreases.

11. The coating mechanism according to any one of claims 2 to 10, wherein
in a second direction, the accommodating cavity comprises a receiving cavity receiving at least a part of the screw and an extrusion cavity; the discharge outlet is located on a cavity wall on a side of the extrusion cavity distal to the receiving cavity; in a third direction, a dimension of a junction between the extrusion cavity and the receiving cavity is more than twice a dimension of the discharge outlet; the second direction intersects with the first direction and the third direction, and the third direction intersects with the second direction.

12. The coating mechanism according to claim 11, wherein
in a direction from the receiving cavity to the discharge outlet, the extrusion cavity comprises a first compression cavity, a damping cavity, and a second compression cavity that are in communication with each other sequentially; the discharge outlet is located on a cavity wall on a side of the second compression cavity distal to the receiving cavity; in the direction from the receiving cavity to the discharge outlet, a dimension of the first compression cavity in a third direction is greater than a dimension of the second compression cavity in a third direction; in the first direction, a dimension of the damping cavity in a third direction first decreases and then increases.

13. The coating mechanism according to any one of claims 1 to 12, wherein
a shape of the discharge outlet is a flat shape, and a length direction of the discharge outlet is the first direction.

14. A coating device, comprising:
the coating mechanism according to any one of claims 1 to 13; and
a material supply mechanism, configured to convey a slurry to a feed inlet of the coating mechanism.

15. The coating device according to claim 14, wherein the coating mechanism is the coating mechanism according to claim 3 or 4; and
wherein the material supply mechanism is a screw feeding mechanism configured to drive a screw of the coating mechanism to rotate.

16. The coating device according to claim 14, wherein the coating mechanism is the coating mechanism according to any one of claims 5 to 8; the coating device further comprises:
a driving member, connected to a screw of the coating mechanism and configured to drive the screw of the coating mechanism to rotate.
